# EUROPEAN PATENT APPLICATION

(11) **EP 2 466 424 A1**
(43) Date of publication of application: **20.06.2012**
(21) Application number: 11164367.2
(22) Date of filing: 29.04.2011
(51) Int. Cl.: G06F 3/033

(54) **Touch pen**

(30) Priority: 14.12.2010 TW 099224173
(71) Applicant: Kooner Technology (Taiwan) Co. Ltd., New Taipei City 23511 (CN)
(72) Inventor: Shih, Chun-Mei, Chiayi City 60047 (TW); Lu, Yung-Suo, PingTang township flat auspicious (CN); Hsu, Chao-Hui, Taoyuan County 32642 (TW); Yu, Liang-Ming, Taoyuan County 335 (TW)
(74) Representative: Lang, Christian

(57) **Abstract**

A touch pen comprises a penholder, an electrically conducting core, a flexible covering and fabric covering. The electrically conducting core is coupled to the penholder. The electrically conducting core is ensheathed in the flexible covering, while the fabric covering wraps around the flexible covering, wherein either flexible covering or fabric covering has electrical conductivity. In the present invention, the flexible covering and the fabric covering are shaped under the pressure exerted by the electrically conducting core and a touch panel so as to increase the contact area between the touch pen and the touch panel and, meanwhile, the fabric covering is capable of reducing the friction between touch pen and the touch panel, thereby improving the sensitivity and touch effect.

## Description

### FIELD OF THE INVENTION

The present invention relates to a touch pen, and more particularly, to a touch pen with high sensitivity and low friction resistance.

### BACKGROUND OF THE INVENTION

With the increasing popularity of smart phones, PDAs and tablet computers, portable game consoles and many types of information appliances, the demand and acceptance of common touch panels are increasing as well. A touch panel generally is a screen attached to electronic visual display, such as a liquid crystal display, that can detect the presence and location of a touch within the display area. The term generally refers to touching the display of the device with a finger or a touch pen. A touch panel is an intuitive human-machine interface that enables a user to interact directly with what is displayed, rather than indirectly with a cursor controlled by a mouse or touchpad and is common in devices such as cellular phones, electronic book devices, electronic dictionary devices, digital cameras, portable nevigation devices, and so on. There are a variety of touchscreen technologies. Accordingly, categorizing by size, for the touch panels that are fabribcated larger than 12 inches, they are primarily surface acoustic touch panels, surface capacitance touch panels, and optical imaging touch panels, and for the touch panels that are fabribcated smaller than 12 inches, they are primarily projected capacitance touch panels and resistive touch panels.

Following the variation and evolution of touch panels, a variety of touch pens and their manufacturing methods had been developed correspondingly. Taking the touch pens adapted for capacitance touch panels for example, there can be various methods designed for making such touch pens in view of the different combinations of conductive penholder and pen tip. Nevertheless, the touch pens that are current available are not perfect. For instance, the touch pen with rubber pen tip not only is restricted by its limited operation angle and orientation, but also can suffer by decreasing sensitivity and short lifespan directly resulting from the high friction coefficient of the rubber tip and the rubber hardening after being used for a period of time. On the other hand, for the touch pen with foam pen tip, the sensitivity thereof will also decrease with time since the foam pen tip is easily worn out or deformed during usage, not to mention that its conductivity is inferior.
Therefore, it is in need of an improve touch pen without the shortcomings of prior art.

### SUMMARY OF THE INVENTION

The present invention relates to a touch pen, which is configured with a flexible covering for enabling the contact area between the touch pen and a touch panel to be increased during a touch of the two, and thus increasing the sensitivity of the touch pen so as to achieve a good touch effect. Moreover, the touch pen further has a fabric covering arranged surrounding the periphery of the flexible covering, that is used for reducing the friction between the touch pen and the touch panel during a touch of the two so as to improve the operation smoothness of the touch pen.

In an embodiment, the present invention provides a touch pen, comprising: a penholder, having a first end and a second end; a conducting core, coupled to the first end; a flexible covering, wrapping around the conducting core; and a fabric covering, wrapping around the flexible covering; wherein the fabric covering is constructed with electric conductivity.

In addition, the conducting core further comprises: a connecting element, fixedly arranged inside the first end; and an extension element, protrudingly disposed at a side of the connecting element; wherein the extension element is arranged for enabling an end thereof to protrude outside the penholder while being ensheathed inside the flexible covering.

In further another embodiment, the present invention provides a touch pen, comprising: a penholder, having a first end and a second end; a conducting core, coupled to the first end; a conductive flexible covering, wrapping around the conducting core; and a fabric covering, wrapping around the conductive flexible covering.

In addition, the conducting core further comprises: a connecting element, fixedly arranged inside the first end; and an extension element, protrudingly disposed at a side of the connecting element; wherein the extension element is arranged for enabling an end thereof to protrude outside the penholder while being ensheathed inside the conducting flexible covering.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:

FIG. 1A and FIG. 1B are an explode view and a cross sectional view of a touch pen according to a first embodiment of the present invention.

FIG. 1C is a schematic diagram showing a penholder for a touch pen that has a fixing ring arranged therein according to an embodiment of the present invention.

FIG. 2 is a schematic diagram showing a penholder for a touch pen according to another embodiment of the present invention.

FIG. 3A is a schematic diagram showing the assembly of a penholder and a conducting core according to an embodiment of the present invention.

FIG. 3B and FIG. 3C are schematic diagrams showing two different assemblies of a penholder and a conducting core according to two embodiments of the present invention.

FIG. 4 is a schematic diagram showing how the flexible covering is assembled with the extension element.

FIG. 5A and FIG. 5B are an explode view and a cross sectional view of a touch pen according to a second embodiment of the present invention.

FIG. 6 is an explode view of a touch pen according to a third embodiment of the present invention.

FIG. 7 is a schematic diagram showing a working touch pen of the present invention.

### DESCRIPTION OF THE EXEMPLARY EMBODIMENTS

For your esteemed members of reviewing committee to further understand and recognize the fulfilled functions and structural characteristics of the invention, several exemplary embodiments cooperating with detailed description are presented as the follows.

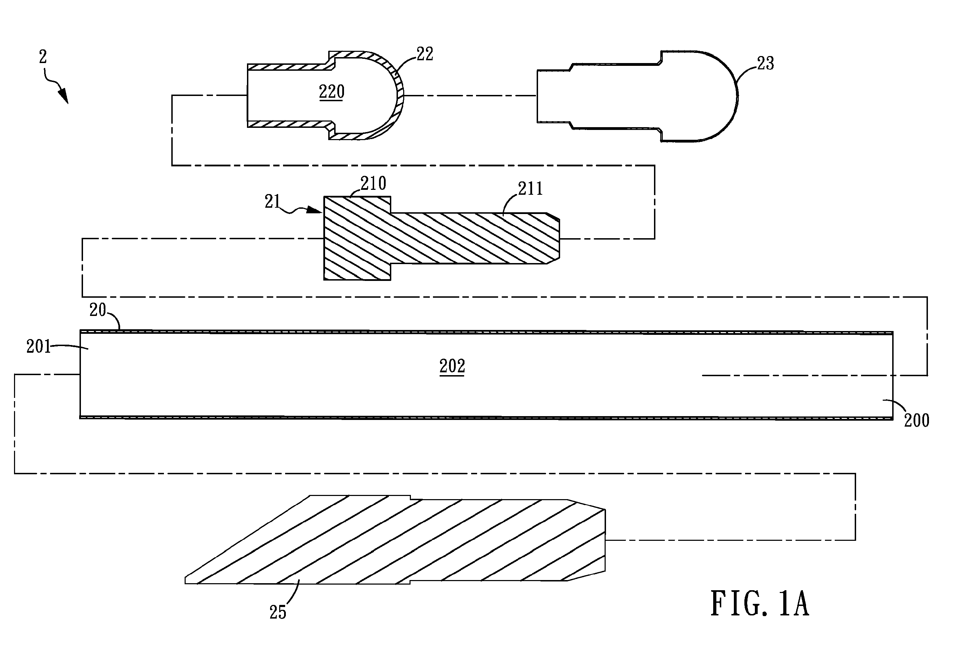

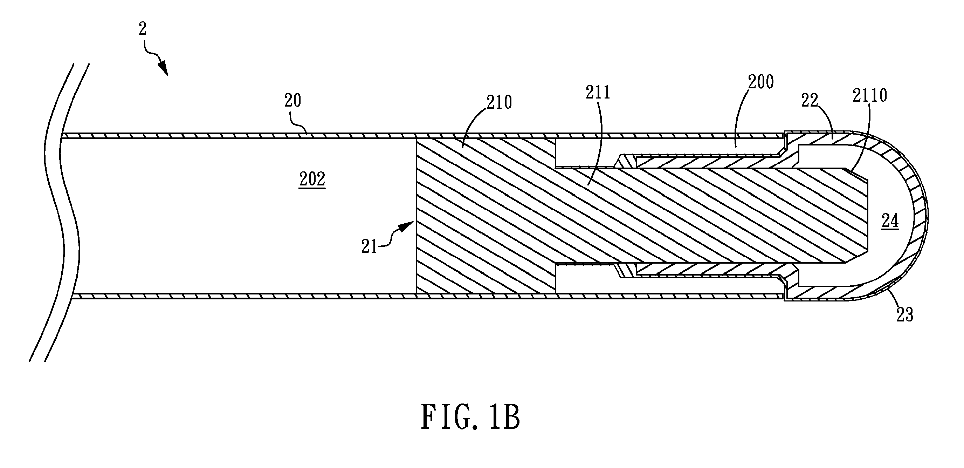

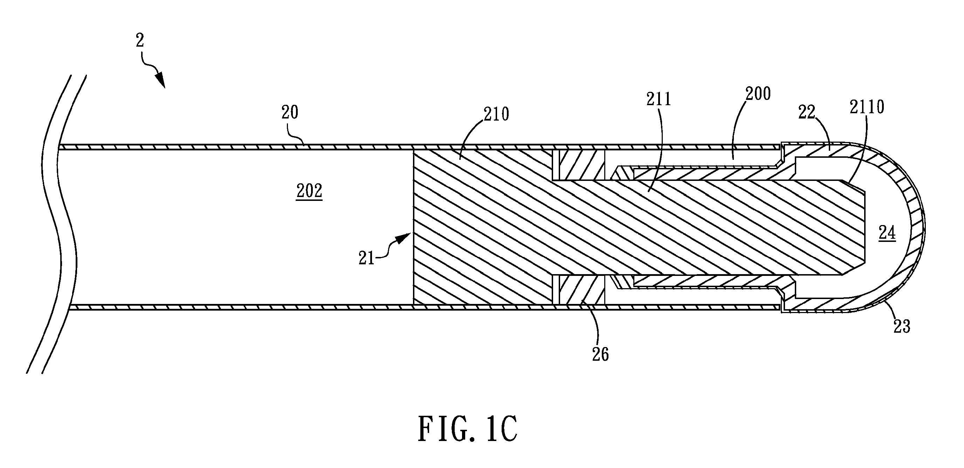

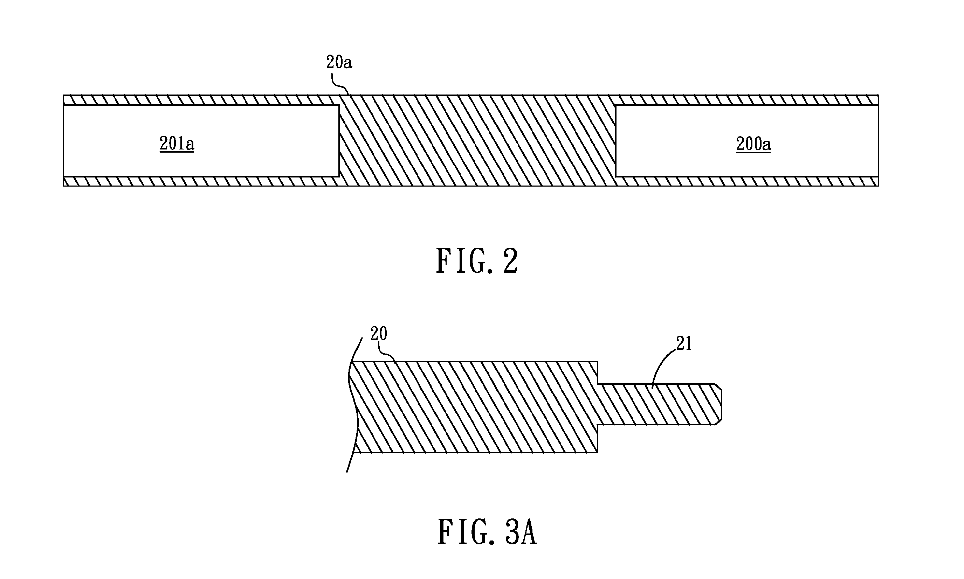

Please refer to FIG. 1A and FIG. 1B, which are an explode view and a cross sectional view of a touch pen according to a first embodiment of the present invention. As shown in FIG. 1 and FIG. 2, the touch pen 2 is composed of: a penholder 20, a conducting core 21, a flexible covering 22 and a fabric covering 23, in which the penholder 20 is further configured with a first end 200 and a second end 201. In this embodiment, the penholder 20 is a hollow tube having an accommodation space 202 formed therein. However, in addition to the hollow tube-like structure, the penholder can be formed as a solid structure, as the penholder 20a shown in FIG. 2, which has two accommodation spaces 200a and 201a formed respectively at the two ends thereof. Moreover, the penholder 20 can be made of a metal, such as stainless steel, or a non-metallic material, such as plastic.

In the embodiment shown in FIG. 1A and FIG. 1B, the conducting core 21 is arranged coupling to the first end 200 of the penholder 20. In addition, the conducting core 21 is configured with a connecting element 210 and an extension element 211 in a manner that the connecting element 21 is fixedly arranged inside the first end 200 of the penholder 20 while enabling an end of the extension element 211 that is protrudingly disposed at a side of the connecting element 210 to protrude outside an opening of the first end 200 of the penholder 20. Moreover, the conducting core is made of a conductive metal, such as stainless steel or copper alloy, but is not limited thereby. In this embodiment, the connecting element 210 is inset into the accommodation space 202 so as to fixedly and tightly connect the connecting element 210 to the penholder 20. In addition to the aforesaid connecting manner, the connecting element 210 can be attached to the penholder 20 by the use of adhesive. Thus, it is to be emphasized that the manner of connecting the connecting element 210 to the penholder 20 is not limited by the manner shown in FIG. 1A and FIG. 1B. For instance, if the penholder 20 and the conducting core 21 are designed to be made of the same material, the structure of the penholder 20 and the conducting core 21 can be manufactured by the use of an integral forming process, as the one shown in FIG. 3A.

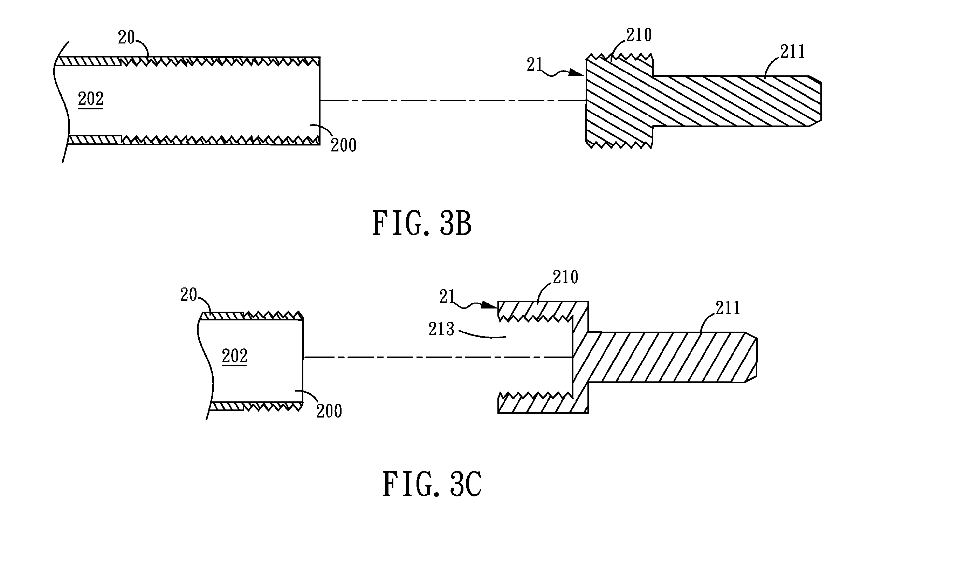

Please refer to FIG. 3B and FIG. 3C, which are schematic diagrams showing two different assemblies of a penholder and a conducting core according to two embodiments of the present invention. In FIG. 3B and FIG. 3C, the connecting of the connecting element 210 to the penholder 20 is achieved by screwing. As shown in FIG. 3B, there are mating screw threads being formed respectively on the outer wall of the connecting element 210 and the internal wall of the first end 200 of the penholder 20, by that the connecting element 210 can be screwed and inset inside the first end 200 so as to fixedly connect the connecting element 210 of the conducting core 21 to the penholder 20. On the other hand, in FIG. 3C, the extension element 210 is formed with a concave 213, and the internal wall of the concave 213 and the outer wall of the first end 200 of the penholder 20 are formed with screw threads in respective, thereby, the connecting element 210 can be fixedly screwed to the first end 200 of the penholder 20.

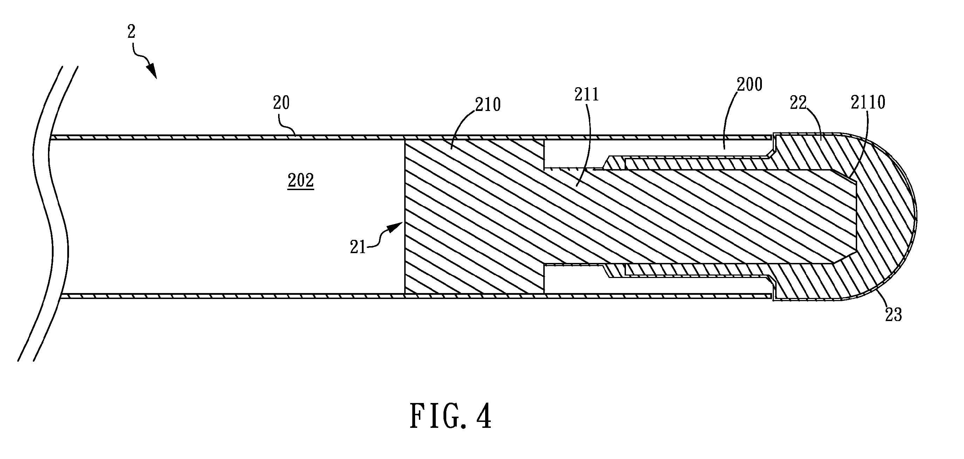

Back to the embodiment shown in FIG. 1A and FIG. 1B, the flexible covering 22 is formed with an accommodation space 220 therein, that is to be used for receiving the extension element 211 so as to enable the extension element 211 of the conducting core 21 to be ensheathed inside the flexible covering 22. It is noted that the flexible covering 22 can be made of a silicone gel or a conductive silicone gel, but is not limited thereby. Moreover, there is a gap 24 formed between the flexible covering 22 and the end 2110 of the extension element 211. Nevertheless, in another embodiment shown in FIG. 4, there is no such gap being formed between the flexible covering 22 and the end 2110 of the extension element 211.

Back to the embodiment shown in FIG. 1A and FIG. 1B, the fabric covering 23 is disposed wrapping the flexible covering 22. In this embodiment, the fabric covering 23 is made of a conductive material, such as a cloth doped with conductive particles. However, it is to be emphasized that it is required in the present invention to have at least one item selected between the flexible covering 22 and the fabric covering 23 that is conductive. That is, if the flexible covering 22 is non-conductive, the fabric covering 23 must be made of a conductive material, such as a conductive cloth; and on the other hand, if the flexible covering 22 is made of a conductive material, such as conductive silicone gel, the fabric covering 21 can be made of non-conductive materials. Surely, both the flexible covering 22 and the fabric covering 23 can be conductive at the same time. Moreover, the touch pen 2 further has a plastic element 25 that is disposed coupling to the second end 201 of the penholder 20. With the advance of injection molding technology in plastic industry, the plastic element 25 can be formed into any shapes at will to be used as a decoration to the touch pen 2. In addition, for strengthening the fixing of the conducting core 21, the touch pen 2 further has a fixing ring 26 to be disposed inside the penholder 20 while being sandwiched between the internal wall of the penholder 20 and the extension element 211 of the conducting core 21, as shown in FIG. 1C. It is noted that the fixing ring 26 cab be made of a metal or rubber.

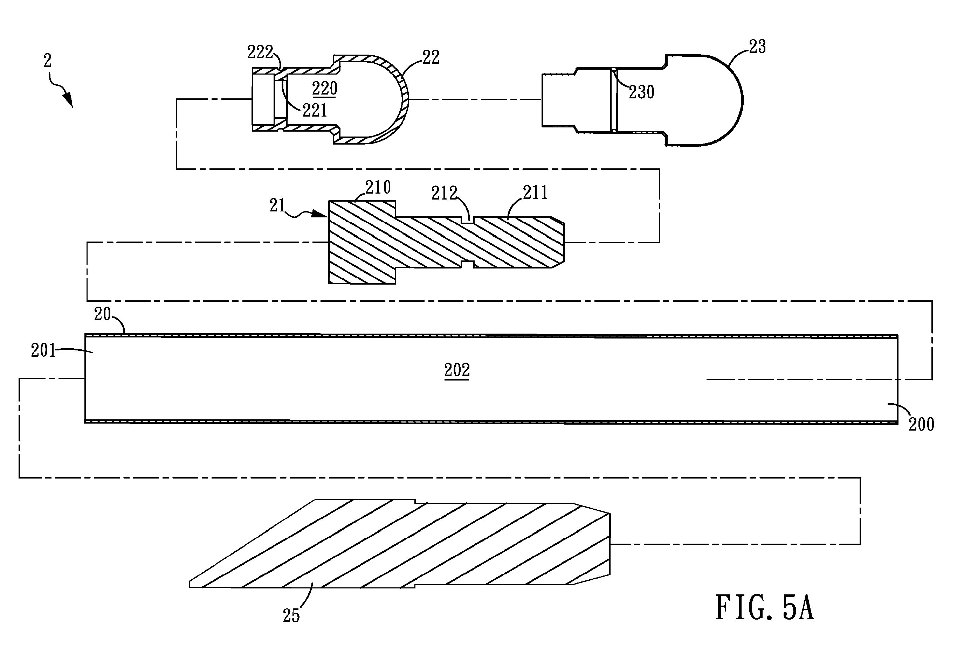

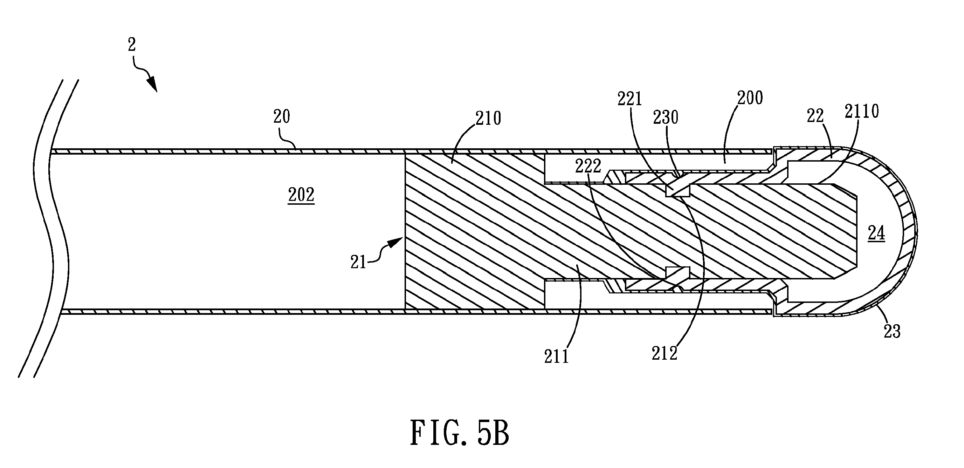

Please refer to FIG. 5A and FIG. 5B, which are an explode view and a cross sectional view of a touch pen according to a second embodiment of the present invention. In this embodiment, the structure of the touch pen is basically the same as the one shown in FIG. 1A and FIG. 1B, but is different in that: there is a first ring-like groove 212 formed on the extension element 211 of the conducting core 21, and correspondingly, there is a first ring-like protrusion 221 formed on the flexible covering 22 at a position corresponding to the first ring-like groove 212. Thereby, while ensheathing the extension element 210 into the flexible covering 22, the first ring-like protrusion 221 will inset into the first ring-like groove 212 so that the fixing of the extension element 210 to the flexible covering 22 is strengthened. Similarly, there is a second ring-like groove 222 formed on the flexible covering 22, and correspondingly, there is a second ring-like protrusion 230 formed on the fabric covering 23 at a position corresponding to the second ring-like groove 222; and thereby, while ensheathing the flexible covering 22 into the fabric covering 23, the second ring-like protrusion 230 will inset into the second ring-like groove 222 so that fixing of the fabric covering 23 to the fabric covering 23 is strengthened.

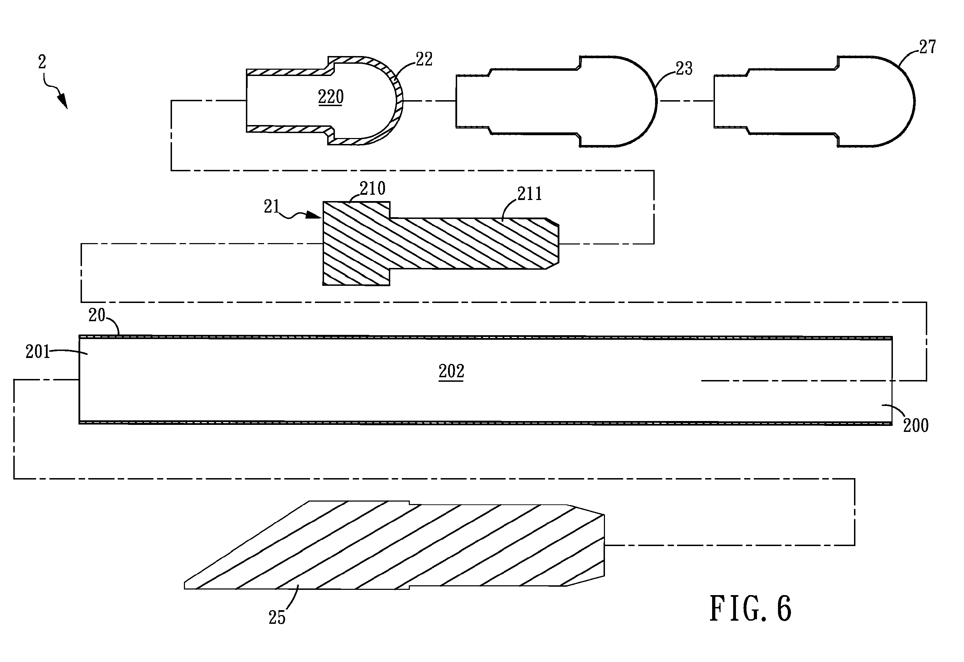

Please refer to FIG. 6, which is an explode view of a touch pen according to a third embodiment of the present invention. In this embodiment, the structure of the touch pen is basically the same as those shown in FIG. 1A and FIG. 5A, but is different in that: the touch pen further has a sleeve 27 to arranged ensheathing the conductive fabric covering 23, whereas the sleeve 27 is made of a material of low friction resistance. Moreover, in this embodiment, the sleeve 27 is substantially a non-conductive fabric sleeve. By the arranging of the non-conductive fabric sleeve that is shown in FIG. 6, the touch panels whose operation surfaces are protected by the use of a protective film with comparatively insufficient hardness can be prevented from being scratched by the conductive fabric covering 23. Moreover, since the e sleeve 27 is made of a material of low friction resistance, the friction between the touch pen and the touch penal can be reduced.

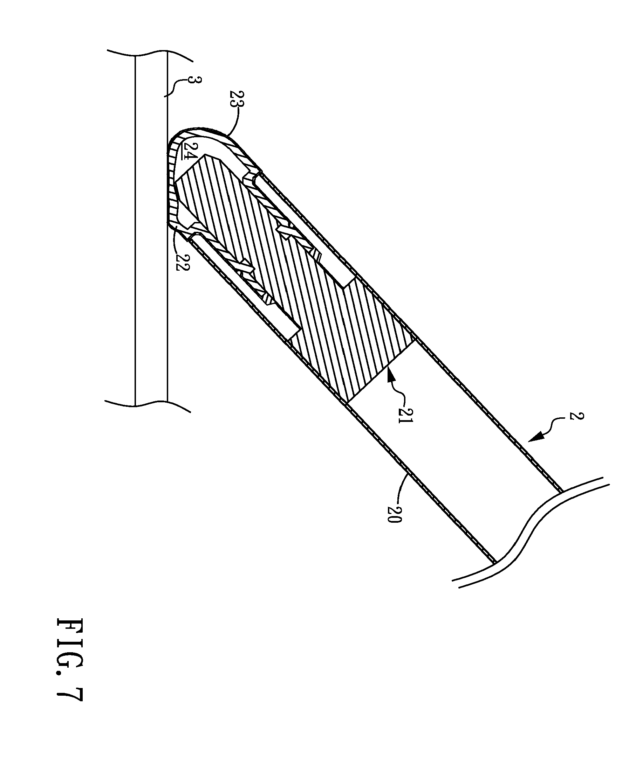

Please refer to FIG. 7, which is a schematic diagram showing a working touch pen of the present invention. Since the flexible covering 22 and the fabric covering 23 are both made of flexible materials, operationally, no matter the touch pen 2 is engaging with the touch panel 3 vertically or non-vertically, both the flexible covering 22 and the fabric covering 23 will be deformed by the engagement as they are being squeezed by the conducting core 21 and the touch panel 3 due to the gap 24 formed therebetween. Consequently, the deformation of the flexible covering 22 and the fabric covering 23 will cause the contact area between the touch pen 2 and the touch panel 3 to increase, and thereby, improve the touch effect. However, if there is no such gap being formed between flexible covering 22 and the fabric covering 23, as the one shown in the embodiment of FIG. 4, the deformation of the flexible covering 22 will still be sufficient for causing the contact area between the touch pen 2 and the touch panel 3 to increase due to the thickness of the flexible covering 22. Moreover, as the flexible covering 22 is warped inside the fabric covering 23 that is made of a cloth of low friction resistance, the increasing in contact area between the touch pen 2 and the touch panel 3, as that shown in FIG. 7, will no cause any increase in friction resistance, and thus, the touch pen 2 can be operated easily and smoothly on the touch panel 3. It is noted that the touch pen 2 disclosed in FIG. 5B is only used for illustration, but it is not limited thereby and can be selected to be the one as disclosed in FIG. 1A or FIG. 7. Moreover, the touch pen of the present invention can be adapted for capacitance touch panels and resistive touch panels, thus, despite that the disclosure relating to FIG. 7 uses a capacitance touch panel for illustration.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

## Claims

1. A touch pen, comprising:
a penholder, having a first end and a second end;
a conducting core, coupled to the first end;
a flexible covering, wrapping around the conducting core; and
a fabric covering, wrapping around the flexible covering;
wherein, the fabric covering is constructed with electric conductivity.

2. The touch pen of claim 1, wherein the flexible covering is made of material selected from the group consisting of: a silicone gel and a conductive silicone gel.

3. The touch pen of claim 1, wherein the conducting core is configured with a connecting element and an extension element in a manner that the connecting element is fixedly arranged inside the first end of the penholder while enabling an end of the extension element that is protrudingly disposed at a side of the connecting element to protrude outside an opening of the first end of the penholder as the extension element is ensheathed inside the flexible covering.

4. A touch pen, comprising:
a penholder, having a first end and a second end;
a conducting core, coupled to the first end;
a conductive flexible covering, wrapping around the conducting core; and
a fabric covering, wrapping around the conductive flexible covering.

5. The touch pen of claim 4, wherein the fabric covering is made of a material selected from the group consisting of: a silk and a conduction cloth.

6. The touch pen of claim 1 or 4, wherein the conducting core is configured with a connecting element and an extension element in a manner that the connecting element is fixedly arranged inside the first end of the penholder while enabling an end of the extension element that is protrudingly disposed at a side of the connecting element to protrude outside an opening of the first end of the penholder as the extension element is ensheathed inside the flexible covering.

7. The touch pen of claim 3 or 6, wherein there is a gap formed between the flexible covering and the end of the extension element.

8. The touch pen of claim 3 or 6, wherein the outer wall of the connecting element and the internal wall of the first end of the penholder are formed with screw threads in respective, thereby, the connecting element can be screwed and inset inside the first end.

9. The touch pen of claim 1 or 4, wherein the conducting core is configured with a connecting element and an extension element, having a concave formed therein, in a manner that the extension element is protrudingly disposed at a side of the connecting element; and the internal wall of the concave and the outer wall of the first end of the penholder are formed with screw threads in respective, thereby, the connecting element can be fixedly screwed to the first end, while allowing the extension element to be ensheathed inside the flexible covering.

10. The touch pen of claim 1 or 4, wherein the penholder is made of a metal.

11. The touch pen of claim 1 or 4, further comprising:
a plastic element, coupled to the second end of the penholder.

12. The touch pen of claim 3 or 6, further comprising:
a fixing ring, disposed inside the penholder while being sandwiched between the internal wall of the penholder and the extension element of the conducting core.

13. The touch pen of claim 1 or 4, further comprising:
a non-conductive sleeve, arranged ensheathing the fabric covering therein for reducing friction resistance.

14. The touch pen of claim 13, wherein the sleeve is substantially a non-conductive fabric sleeve.

## Amended claims

### Amended claims in accordance with Rule 137(2) EPC.

**1.** A touch pen (2), comprising:
a penholder (20), having a first end (200, 200a) and a second end (201, 201a);
a conducting core (21), coupled to the first end (200, 200a);
a flexible covering (22), wrapping around the conducting core (21); and
a fabric covering (23), wrapping around the flexible covering(21), the fabric covering (23) being constructed with electric conductivity
**characterized in that** the conducting core (21) is configured with a connecting element (210) and an extension element (211) in a manner that the connecting element (210) is fixedly arranged inside the first end (200, 200a) of the penholder (20) while enabling an end of the extension element (211) that is protrudingly disposed at a side of the connecting element (210) to protrude outside an opening of the first end (200, 200a) of the penholder (20) as the extension element (211) is ensheathed inside the flexible covering (22) and **in that** a gap (24) is formed between the flexible covering (22) and the end of the extension element (211).

**2.** The touch pen (2) of claim 1, wherein the flexible covering (22) is made of material selected from the group consisting of: a silicone gel and a conductive silicone gel.

**3.** A touch pen (2), comprising:
a penholder (20), having a first end (200, 200a) and a second end (201, 201a);
a conducting core (21), coupled to the first end (200, 200a); and
a conductive flexible covering (22), wrapping around the conducting core (21)
**characterized in that** the touch pen (2) further comprises: a fabric covering (23), wrapping around the conductive flexible covering (22).

**4.** The touch pen (2) of claim 3, wherein the fabric covering (23) is made of a material selected from the group consisting of: a silk and a conduction cloth.

**5.** The touch pen (2) of claim 3, wherein the conducting core (21) is configured with a connecting element (210) and an extension element (211) in a manner that the connecting element (210) is fixedly arranged inside the first end (200, 200a) of the penholder (20) while enabling an end of the extension element (211) that is protrudingly disposed at a side of the connecting element (210) to protrude outside an opening of the first end (200, 200a) of the penholder (20) as the extension element (211) is ensheathed inside the flexible covering (22).

**6.** The touch pen (2) of claim 5, wherein there is a gap (24) formed between the flexible covering (22) and the end of the extension element (211).

**7.** The touch pen (2) of claim 1 or 5, wherein the outer wall of the connecting element (210) and the internal wall of the first end (200) of the penholder (20) are formed with screw threads in respective, thereby, the connecting element (210) can be screwed and inset inside the first end (200).

**8.** The touch pen (2) of claim 1 or 5, wherein the extension element (211) has a concave (213) formed therein, in a manner that the extension element (211) is protrudingly disposed at a side of the connecting element (210); and the internal wall of the concave (213) and the outer wall of the first end (200) of the penholder (20) are formed with screw threads in respective, thereby, the connecting element (210) can be fixedly screwed to the first end (200), while allowing the extension element (211) to be ensheathed inside the flexible covering (22).

**9.** The touch pen (2) of claim 1 or 3, wherein the penholder (20) is made of a metal.

**10.** The touch pen (2) of claim 1 or 3, further comprising:
a plastic element (25), coupled to the second end (201) of the penholder (20).

**11.** The touch pen (2) of claim 1 or 5, further comprising:
a fixing ring (26), disposed inside the penholder (20) while being sandwiched between the internal wall of the penholder (20) and the extension element (211) of the conducting core (21).

**12.** The touch pen (2) of claim 1 or 3, further comprising:
a non-conductive sleeve (27), arranged ensheathing the fabric covering (23) therein for reducing friction resistance.

**13.** The touch pen (2) of claim 12, wherein the sleeve (27) is substantially a non-conductive fabric sleeve.
